# EUROPÄISCHE PATENTANMELDUNG

(11) **EP 3 136 029 A1**
(43) Veröffentlichungstag der Anmeldung: **01.03.2017**
(21) Anmeldenummer: 16001510.3
(22) Anmeldetag: 07.07.2016
(51) Int. Cl.: F25J 3/02, C01B 3/50, C01B 32/40

(54) **VERFAHREN UND VORRICHTUNG ZUR ERZEUGUNG EINES GASPRODUKTS**

(30) Priorität: 23.07.2015 DE 102015009562
(71) Anmelder: Linde Aktiengesellschaft, 80331 München (DE)
(72) Erfinder: Klein, Bernd, 80997 München (DE); Brandl, Alexander, 81549 München (DE); Albert, Florian, 83026 Rosenheim (DE)
(74) Vertreter: Fischer, Werner

(57) **Zusammenfassung**

Die Erfindung betrifft ein Verfahren sowie eine Vorrichtung zur Gewinnung eines Gasprodukts (6), wobei ein erster (8) mit einem zweiten Gasstrom (4) vereinigt wird und der erste, mit einem geringeren Ausgangsdruck als der zweite (4) vorliegende Gasstrom (8) einem mechanischen Verdichter (V) zugeführt wird, um auf den vorgegebenen Druck des Gasprodukts (6) verdichtet zu werden. Kennzeichnend ist hierbei, dass der Druck des ersten Gasstroms (8) mit Hilfe eines stromaufwärts des mechanischen Verdichters (V) angeordneten Gasstrahlverdichter (P) angehoben wird, dem zumindest ein Teil (9) des zweiten Gasstroms (4) als Treibmittel zugeführt wird.

## Beschreibung

Die Erfindung betrifft ein Verfahren zur Gewinnung eines Gasprodukts, wobei ein erster mit einem zweiten Gasstrom vereinigt wird und der erste, mit einem geringeren Ausgangsdruck als der zweite vorliegende Gasstrom einem mechanischen Verdichter zugeführt wird, um auf den vorgegebenen Druck des Gasprodukts verdichtet zu werden.

Außerdem betrifft die Erfindung eine Vorrichtung zur Durchführung des erfindungsgemäßen Verfahrens.

Verfahren und Vorrichtungen der eingangs beschriebenen Art werden etwa bei der Gewinnung eines Kohlenmonoxidprodukts aus einem vorwiegend aus Wasserstoff und Kohlenmonoxid bestehenden Synthesegas eingesetzt, wobei das Synthesegas in einem kryogenen Verfahren, bei dem es sich beispielsweise um einen Kondensationsprozess handelt, in kohlenmonoxidhaltigen Rohwasserstoff und zumindest einen Kohlenmonoxidstrom zerlegt wird, der zwar die für das Kohlenmonoxidprodukt geforderte Reinheit aufweist, dessen Druck jedoch geringer ist als der verlangte Produktdruck. Der Druck dieses Kohlenmonoxidstroms wird daher mit Hilfe eines u. U. mit mehreren Sektionen ausgeführten mechanischen Verdichters auf den geforderten Wert angehoben.

Alternativ dient der mechanische Verdichter auch zum Antrieb eines Kältekreislaufs, der den Kältebedarf des kryogenen Verfahrens ganz oder teilweise deckt. Hierzu wird ein Teil des verdichteten Kohlenmonoxids zurückgeführt, gegen anzuwärmende Verfahrensströme abgekühlt und kälteleistend entspannt oder - nach vorangegangener Kondensation - verdampft. Das entspannte und wieder angewärmte Kohlenmonoxid wird nachfolgend erneut dem mechanischen Verdichter zugeleitet.

Der kohlenmonoxidhaltige Rohwasserstoff wird adsorptiv in ein Wasserstoffprodukt und ein kohlenmonoxidreiches Purgegas getrennt, das aufgrund seiner Reinheit zur Bildung des Kohlenmonoxidprodukts verwendet werden kann, dessen Druck jedoch in der Nähe des Atmosphärendrucks liegt, und damit wesentlich niedriger ist als die Drücke der anderen Kohlenmonoxidströme des Verfahrens.

Als mechanische Verdichter werden nach dem Stand der Technik Maschinen wie Schrauben-, Kolben- oder Turboverdichter verwendet, die komplex aufgebaut und wegen der großen Anzahl ihrer beweglichen Teile zudem verschleiß- und störanfällig sind. Für diese Maschinen ergeben sich daher hohe Investitions- und Betriebskosten, die einen erheblichen und mit abnehmendem Druckniveau des zu verdichtenden Kohlenmonoxids ansteigenden Einfluss auf die Wirtschaftlichkeit der Kohlenmonoxidgewinnung haben.

Dies ist insbesondere dann von Bedeutung, wenn zur Erhöhung der Ausbeute des Verfahrens das bei der Behandlung des kohlenmonoxidhaltigen Rohwasserstoffs anfallende Purgegas ebenfalls in das Kohlenmonoxidprodukt überführt werden soll. In diesem Fall kann es notwendig sein, den mechanischen Verdichter mit einer zusätzlichen Niederdrucksektion auszustatten, deren Betrieb die erhöhte Gefahr einer Vakuumbildung und damit des Eintrags von Sauerstoff aus der Umgebung, durch den das Kohlenmonoxidprodukts verunreinigt wird, mit sich bringt.

Aufgabe der vorliegenden Erfindung ist es daher, ein Verfahren sowie eine Vorrichtung der gattungsgemäßen Art anzugeben, durch die es möglich ist, die beschriebenen Nachteile des Standes der Technik zu überwinden.

Verfahrensseitig wird die gestellte Aufgabe erfindungsgemäß dadurch gelöst, dass der Druck des ersten Gasstroms stromaufwärts des mechanischen Verdichters mit Hilfe eines Gasstrahlverdichters angehoben wird, dem zumindest ein Teil des zweiten Gasstroms als Treibmittel zugeführt wird.

Das erfindungsgemäße Verfahren erlaubt es, zur Verdichtung des ersten Gasstroms einen mechanischen Verdichter einzusetzen, dessen minimaler Ansaugdruck deutlich oberhalb des Ausgangsdrucks des ersten Gasstrom liegt. Abhängig von Druck und Menge des als Treibmittel eingesetzten Teils des zweiten Gasstroms ist es möglich, auf eine oder sogar mehrere Niederdrucksektionen des mechanischen Verdichters zu verzichten, wodurch die für den Gasstrahlverdichter anfallenden Investitionskosten mehr als ausgeglichen werden.

Gasstrahlverdichter sind seit vielen Jahren Stand der Technik und dem Fachmann bekannt. Sie weisen einen relativ einfachen Aufbau ohne bewegliche Teile auf und sind robust, so dass sie zu deutlich geringeren Kosten eingesetzt werden können, als mechanische Verdichter bzw. Verdichtersektionen.

In der Treibdüse des Gasstrahlverdichters wird ein Teil der Druckenergie des als Treibmittel eingesetzten Teils des zweiten Gasstroms in Geschwindigkeitsenergie umgewandelt, so dass ein Gasstrom entsteht, dessen statischer Druck geringer ist als der Ausgangsdruck des ersten Gasstroms. Durch das aus der Treibdüse austretende Treibmittel kann daher der erste Gasstrom angesaugt und beschleunigt werden. In dem sich an die Treibdüse anschließenden Einlaufkonus des Diffusors mischen sich die beiden Gasströme, bevor sie im Diffusor wieder abgebremst werden. Da durch die Abbremsung Druckenergie zurückgewonnen wird, verlässt der erste Gasstrom den Gasstrahlverdichter zusammen mit dem als Treibmittel eingesetzten Teil des zweiten Gasstroms und mit einem höheren als seinem Ausgangsdruck.

Vorzugsweise wird der als Treibmittel eingesetzte Teil des zweiten Gasstroms dem Gasstrahlverdichter mit einem Druck zugeführt, der im wesentlichen dem Ausgangsdruck des zweiten Gasstroms entspricht. Alternativ wird der Druck zumindest des als Treibmittel eingesetzten Teils des zweiten Gasstroms mit Hilfe des mechanischen Verdichters auf einen oberhalb seines Ausgangsdrucks liegenden Wert angehoben, ehe er im Gasstrahlverdichter verwendet wird.

Der Druck des ersten Gasstroms wird zweckmäßigerweise mit Hilfe des Gasstrahlverdichters von seinem Ausgangswert bis auf einen Wert angehoben, der gleich oder größer dem Ansaugdruck des mechanischen Verdichters ist, so dass der erste Gasstrom dem mechanischen Verdichter ohne eine weitere Verdichtung zugeführt werden kann.

Das erfindungsgemäße Verfahren kann bei einer Vielzahl von Verdichtungsaufgaben eingesetzt werden. Vorzugsweise wird es aber dazu eingesetzt, um bei der Zerlegung eines überwiegend aus Wasserstoff und Kohlenmonoxid bestehenden Synthesegases auf unterschiedlichen Druckniveaus anfallende Kohlenmonoxidströme zu einem Kohlenmonoxidprodukt zu verdichten. Besonders vorteilhaft kann es dann eingesetzt werden, wenn aus dem Synthesegas in einem kryogenen Trennprozess ein Produktreinheit aufweisender Kohlenmonoxidstrom sowie ein Kohlenmonoxid enthaltender Rohwasserstoffstrom erhalten werden, der nachfolgend adsorptiv getrennt wird, wobei ein Kohlenmonoxid enthaltendes Purgegas anfällt, das aufgrund seiner Reinheit zur Bildung des Kohlenmonoxidprodukts verwendet werden kann, dessen Druck jedoch geringer ist als der Druck des zweiten, direkt im kryogenen Trennprozess erhaltenen Kohlenmonoxidstroms. Zumindest ein Teil dieses zweiten Kohlenmonoxidstroms wird dann einem Gasstrahlverdichter als Treibmittel zugeführt, mit dem der Druck des Purgegases angehoben wird, um es nachfolgend mit Hilfe eines mechanischen Verdichters auf den Druck des Kohlenmonoxidprodukts zu verdichten.

Weiterhin betrifft die Erfindung eine Vorrichtung zur Gewinnung eines Gasprodukts mit einer, einen mechanischen Verdichter umfassenden Einrichtung zur Vereinigung eines ersten und eines zweiten Gasstroms, wobei der erste, mit einem geringeren Ausgangsdruck als der zweite vorliegende Gasstrom in dem mechanischen Verdichter auf den vorgegebenen Druck des Gasprodukts verdichtet werden kann.

Die gestellte Aufgabe wird vorrichtungsseitig erfindungsgemäß dadurch gelöst, dass sie einen stromaufwärts des mechanischen Verdichters angeordneten Gasstrahlverdichter zur Anhebung des Drucks des ersten Gasstroms aufweist, dem zumindest ein Teil des zweiten Gasstroms als Treibmittel zuführbar ist.

Vorzugsweise weist die erfindungsgemäße Vorrichtung genau einen Gasstrahlverdichter auf. Es soll aber nicht ausgeschlossen sein, dass sie zwei oder mehr parallel und/oder seriell angeordnete Gasstrahlverdichter zur Anhebung des Drucks des ersten Gasstroms umfasst, denen jeweils zumindest ein Teil des zweiten und/oder ein dritter Gasstrom als Treibmittel zugeführt werden kann.

Eine Ausgestaltung der erfindungsgemäßen Vorrichtung weist einen Gaszerleger auf, in dem ein Gasgemisch zerlegt werden kann, um den ersten und den zweiten Gasstrom zu erhalten. Vorzugsweise umfasst der Gaszerleger einen kryogenen Teil sowie einen Druckwechseladsorber, wobei ein im Wesentlichen aus Wasserstoff und Kohlenmonoxid bestehendes Synthesegas im kryogene Teil in wenigstens einen Produktreinheit aufweisenden Kohlenmonoxidstrom, der den zweiten Gasstrom bildet, und kohlenmonoxidhaltigen Rohwasserstoff zerlegbar ist, aus dem im Druckwechseladsorber Reinwasserstoff und ein kohlenmonoxidreiches Purgegas, das den ersten Gasstrom darstellt, erzeugt werden können.

Falls der Gaszerleger einen kryogenen Teil umfasst, kann der mechanische Verdichter zum Antrieb eines Kühlkreislaufs eingesetzt werden, der Kälte für den kryogenen Teil zur Verfügung stellt, und in dem ein die an das Gasprodukt gestellten Reinheitsanforderungen erfüllendes Stoffgemisch als Kältemittel zirkuliert.

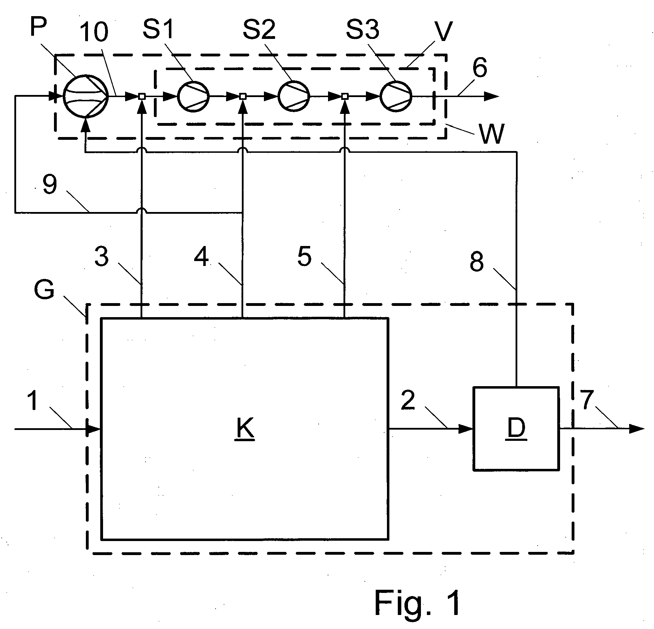

Im Folgenden soll die Erfindung anhand eines in der Figur 1 schematisch dargestellten Ausführungsbeispiels näher erläutert werden.

Die Figur 1 zeigt eine Einrichtung zur kryogenen Zerlegung eines hauptsächlich aus Wasserstoff und Kohlenmonoxid bestehenden Synthesegases, wobei auf unterschiedlichen Druckniveaus anfallende Kohlenmonoxidströme zu einem Kohlenmonoxidprodukt vereinigt werden.

Über Leitung 1 wird ein weitgehend aus Wasserstoff und Kohlenmonoxid bestehendes Synthesegas in den kryogenen Teil K des Gaszerlegers G eingeleitet, wo es in Rohwasserstoff 2 sowie die Kohlenmonoxidströme 3, 4 und 5 zerlegt wird. Die Kohlenmonoxidströme 3, 4 und 5 weisen alle eine Reinheit auf, die es erlauben würde, sie als Kohlenmonoxidprodukt abzugeben, liegen allerdings mit Drücken vor, die geringer sind als der geforderte Produktdruck. Sie werden daher in der Einrichtung W dem die Verdichtersektionen S1, S2 und S3 aufweisenden Verdichter V zugeleitet, um zusammengeführt und zu dem Kohlenmonoxidprodukt 6 verdichtet zu werden. Die Auslegung des Verdichters V wird maßgeblich durch den Kohlenmonoxidstrom 3 bestimmt, dessen Druckniveau am kleinsten ist.

Zur Abtrennung von Kohlenmonoxid und der Erzeugung eines Wasserstoffproduktes 7, das eine Reinheit von mehr als 99,9Vol-% aufweist, wird der Rohwasserstoff 2 der zum Gaszerleger G gehörenden Druckwechseladsorptionseinrichtung D zugeführt, bei deren Regenerierung ein kohlenmonoxidreiches Purgegas 8 mit einem Druck anfällt, der nur wenig größer als der Umgebungsdruck und deutlich geringer als der Druck des Kohlenmonoxidstroms 3 ist. Um die Kohlenmonoxidausbeute zu erhöhen, wird das Purgegas 8 im Gasstrahlverdichter P auf einen Druck verdichtet, der gleich oder größer ist als der Druck des Kohlenmonoxidstroms 3, wobei ein Teil 9 des Kohlenmonoxidstroms 4 im Gasstrahlverdichter P als Treibmittel dient. Der im Gasstrahlverdichter P erhaltene Kohlenmonoxidstrom 10 wird anschießend mit dem Kohlenmonoxidstrom 3 kombiniert und über die Niederdrucksektion S1 dem Verdichter V zugeführt.

## Patentansprüche

1. Verfahren zur Gewinnung eines Gasprodukts (6), wobei ein erster (8) mit einem zweiten Gasstrom (4) vereinigt wird und der erste, mit einem geringeren Ausgangsdruck als der zweite (4) vorliegende Gasstrom (8) einem mechanischen Verdichter (V) zugeführt wird, um auf den vorgegebenen Druck des Gasprodukts (6) verdichtet zu werden, **dadurch gekennzeichnet, dass** der Druck des ersten Gasstroms (8) mit Hilfe eines stromaufwärts des mechanischen Verdichters (V) angeordneten Gasstrahlverdichters (P) angehoben wird, dem zumindest ein Teil (9) des zweiten Gasstroms (4) als Treibmittel zugeführt wird.

2. Verfahren nach Anspruch 1, **dadurch gekennzeichnet, dass** der als Treibmittel verwendete Teil (9) des zweite Gasstroms (4) dem Gasstrahlverdichter direkt mit im wesentlichen dem Ausgangsdruck des zweiten Gasstroms (4) oder im Anschluss an eine mit Hilfe des mechanischen Verdichters (V) durchgeführte Druckerhöhung zugeführt wird.

3. Verfahren nach einem der Ansprüche 1 bis 3, **dadurch gekennzeichnet, dass** der Druck des ersten Gasstroms (8) mit Hilfe des Gasstrahlverdichters (P) von seinem Ausgangswert auf einen Wert angehoben wird, der größer oder gleich dem Ansaugdruck des mechanischen Verdichters (V) ist.

4. Verfahren nach einem der Ansprüche 1 bis 4, **dadurch gekennzeichnet, dass** es bei der Gewinnung eines Kohlenmonoxidproduktes (6) eingesetzt wird, bei der ein überwiegend aus Wasserstoff und Kohlenmonoxid bestehenden Synthesegas (1) in einem kryogenen Trennprozess (K) zerlegt wird, wobei ein Kohlenmonoxid enthaltender Rohwasserstoffstrom (2) sowie zumindest ein Kohlenmonoxidstrom (4), der den zweiten Gasstrom bildet, erhalten werden und wobei der Rohwasserstoffstrom (2) durch Druckwechseladsorption (D) in Reinwasserstoff (7) sowie ein kohlenmonoxidreiches Purgegas (8), das den ersten Gasstrom darstellt, getrennt wird.

5. Vorrichtung zur Gewinnung eines Gasprodukts (6) mit einer, einen mechanischen Verdichter (V) umfassenden Einrichtung (W) zur Vereinigung eines ersten (8) und eines zweiten Gasstroms (4), wobei der erste, mit einem geringeren Ausgangsdruck als der zweite (4) vorliegende Gasstrom (8) in dem mechanischen Verdichter (V) auf den vorgegebenen Druck des Gasprodukts (6) verdichtet werden kann, **dadurch gekennzeichnet, dass** sie einen stromaufwärts des mechanischen Verdichters (V) angeordneten Gasstrahlverdichter (P) zur Anhebung des Drucks des ersten Gasstroms (8) aufweist, dem zumindest ein Teil (9) des zweiten Gasstroms (4) als Treibmittel zuführbar ist.

6. Vorrichtung nach Anspruch 5, **dadurch gekennzeichnet, dass** sie zwei oder mehr parallel und/oder seriell angeordnete Gasstrahlverdichter (P) zur Anhebung des Drucks des ersten Gasstroms (8) umfasst.

7. Vorrichtung nach einem der Ansprüche 5 oder 6, **dadurch gekennzeichnet, dass** sie einen Gaszerleger (G) mit einem kryogenen Teil (K) umfasst, in dem zumindest einer der beiden unterschiedliche Drücke aufweisenden Gasströme (4, 8) erzeugt werden kann.

8. Vorrichtung nach Anspruch 7, **dadurch gekennzeichnet, dass** sie einen Gaszerleger (G) mit einem kryogenen Teil (K) sowie einem Druckwechseladsorber (D) umfasst, wobei ein im Wesentlichen aus Wasserstoff und Kohlenmonoxid bestehendes Synthesegas (1) im kryogene Teil (K) in wenigstens einen Produktreinheit aufweisenden Kohlenmonoxidstrom (4), der den zweiten Gasstrom bildet, und einen kohlenmonoxidhaltigen Rohwasserstoffstrom (2) zerlegbar ist, aus dem im Druckwechseladsorber (D) Reinwasserstoff (7) und ein kohlenmonoxidreiches Purgegas (8), das den ersten Gasstrom darstellt, erzeugt werden können.

9. Vorrichtung nach einem der Ansprüche 7 oder 8, **dadurch gekennzeichnet, dass** der kryogene Teil (K) des Gaszerlegers (G) über einen Kühlkreislauf gekühlt werden kann, der über den mechanischen Verdichter (V) angetriebenen wird.
